# EUROPÄISCHE PATENTSCHRIFT

(11) **EP 3 032 188 B1**
(45) Veröffentlichungstag und Bekanntmachung des Hinweises auf die Patenterteilung: **12.08.2020**
(21) Anmeldenummer: 15198035.6
(22) Anmeldetag: 04.12.2015
(51) Int. Cl.: F24T 10/15, F24T 10/00

(54) **SONDENKÖRPER VORGESEHEN ZUM EINBAU IN EIN BOHRLOCH ALS GEOTHERMIESONDE**
PROBE BODY FOR INSTALLATION IN A BOREHOLE AS A GEO-THERMAL PROBE
CORPS DE SONDE A INSERER DANS UN TROU DE FORAGE EN TANT QUE SONDE GEOTHERMIQUE

(30) Priorität: 11.12.2014 AT 8972014
(43) Veröffentlichungstag der Anmeldung: 15.06.2016
(73) Patentinhaber: Jansen AG, 9463 Oberriet (CH)
(72) Erfinder: Alge, Dietmar, 6890 Lustenau (AT); Brülisauer, Urs, 9463 Oberriet (CH); Walker, Jana, 9010 St. Gallen (CH)
(74) Vertreter: Fechner, Thomas

(56) Entgegenhaltungen:
- EP-A1- 2 312 237
- EP-A2- 2 738 481
- DE-A1- 4 440 550
- DE-A1-102008 057 245
- DE-U1- 29 613 450
- DE-U1-202005 004 815
- JP-A- 2011 149 663
- US-A1- 2011 091 288
- US-B1- 7 380 605

## Beschreibung

Die vorliegende Erfindung betrifft einen Sondenkörper vorgesehen zum Einbau in ein Bohrloch als Geothermiesonde, wobei der Sondenkörper vier von Wärmeträgerfluid durchströmbare Wärmeträgerfluidschläuche aufweist und jeweils zwei der Wärmeträgerfluidschläuche über jeweils ein Sondenfußteil mechanisch miteinander verbunden sind, und die mittels des Sondenfußteils mechanisch miteinander verbundenen Wärmeträgerfluidschläuche im Sondenfußteil mittels einer Verbindungsleitung fluidleitend miteinander verbunden sind, wobei die Wärmeträgerfluidschläuche des Sondenkörpers auf zwei separate Schlauchrollen aufgeteilt sind, und jede der Schlauchrollen durch zwei gemeinsam aufgewickelte Wärmeträgerfluidschläuche gebildet ist und die beiden Wärmeträgerfluidschläuche der jeweiligen Schlauchrolle über jeweils eines der Sondenfußteile mechanisch miteinander verbunden sind, wobei die vier Wärmeträgerfluidschläuche zum Sondenkörper mittels Zusammensetzen der Sondenfußteile zu einem Sondenfuß zusammenbaubar sind.

Ein Beispiel für einen Sondenkörper ist in der US 2011/0091288 A1 gezeigt. Die vier Wärmeträgerfluidschläuche werden einzeln auf Rollen aufgewickelt zur Baustelle geliefert und dann in Aufnahmekanäle eines Pfahls aus Beton oder Metall eingelegt. Am tiefsten Punkt sind jeweils zwei der Wärmeträgerfluidschläuche im Einbauzustand mittels eines Kupplungsstücks miteinander verbunden.

In der DE 296 13 450 U1 ist ein Sondenkörper mit vier Rohren gezeigt, von denen jeweils zwei Rohre in einem Block über einen Krümmer verbunden sind. Die Blöcke sind mit einem umschlingenden Band zu einer Einheit verbindbar.

Aus der JP 2011-149663 A geht eine Einrichtung zum Einführen eines Sondenkörpers in ein Bohrloch hervor, wobei der Sondenkörper zwei U-förmige Wärmeträgerrohre aufweist. Ein jeweiliges Wärmeträgerrohre ist zu einem Schlauchbündel aufgewickelt. Die U-förmigen End-Abschnitte der Wärmeträgerrohre werden vor dem Einbau der Sonde in das Bohrloch mittels Metalldraht miteinander verbunden.

Ein weiterer Sondenkörper zum Einbau in ein Bohrloch als Geothermiesonde ist z.B. in der EP 2 738 481 A2 gezeigt. In dieser Schrift wird vorgeschlagen, alle Wärmeträgerfluidschläuche des Sondenkörpers gemeinsam aufzuwickeln, um so den Sondenkörper einfacher lagern und transportieren zu können.

Aufgabe der Erfindung ist es, einen gattungsgemäßen Sondenkörper dahingehend weiter zu verbessern, dass er nicht nur vor dem Einbau in das Bohrloch gut transportier- und lagerbar, sondern auch möglichst unkompliziert in das Bohrloch einbaubar ist.

Erfindungsgemäß gelingt dies durch einen Sondenkörper nach Anspruch 1.

Die Wärmeträgerfluidschläuche des Sondenkörpers sind auf zwei separate Schlauchrollen aufgeteilt, wobei jede der Schlauchrollen durch zwei gemeinsam aufgewickelte Wärmeträgerfluidschläuche gebildet ist und die beiden Wärmeträgerfluidschläuche der jeweiligen Schlauchrolle über jeweils eines der Sondenfußteile mechanisch miteinander verbunden sind.

Damit wird ein Optimum zwischen einem möglichst hohen Grad der Fertigstellung des Sondenkörpers bei seiner Herstellung in der Fabrik einerseits und der Einfachheit des Einbaus des Sondenkörpers in das Bohrloch als Geothermiesonde andererseits zu finden. Beim Sondenkörper, welcher insgesamt vier Wärmeträgerfluidschläuche aufweist, sind nur jeweils zwei dieser Wärmeträgerfluidschläuche gemeinsam zu einer Schlauchrolle aufgewickelt. Diese beiden gemeinsam aufgewickelten Wärmeträgerfluidschläuche sind dabei jeweils durch ein Sondenfußteil mechanisch miteinander verbunden. Hierdurch ergeben sich kleinere und besser handhabbare Schlauchrollen. Bei dieser Teilung des Sondenkörpers in zwei Schlauchrollen, lässt sich der Sondenkörper gut in das Bohrloch einbauen. Man braucht hierzu vor Ort nur die beiden Sondenfußteile miteinander zu verbinden, sodass der Sondenfuß und dann nach und nach auch die vier Wärmeträgerfluidschläuche durch Abwickeln von den beiden Schlauchrollen einfach handhabbar in das Bohrloch versenkt werden können, woraus letztendlich dann die Geothermiesonde als Ganzes entsteht.

Besonders einfach handhabbar sind erfindungsgemäße Sondenkörper, wenn die gemeinsam zu einer der Schlauchrollen aufgewickelten Wärmeträgerfluidschläuche zumindest im abgewickelten Zustand jeweils nur über das Sondenfußteil mechanisch miteinander verbunden sind. Die Wärmeträgerfluidschläuche können vor dem Einbau des Sondenkörpers in das Bohrloch auf verschiedene Art und Weise zu einer Schlauchrolle zusammengefasst sein. So ist es z.B. einerseits möglich, die beiden Wärmeträgerfluidschläuche der jeweiligen Schlauchrolle gemeinsam auf eine Schlauchtrommel aufzuwickeln. Eine im Sinne der Gewichtsreduktion der zu transportierenden Schlauchrollen sogar bevorzugte Alternative hierzu sieht vor, dass die Wärmeträgerfluidschläuche der jeweiligen Schlauchrolle zu einem Schlauchbündel zusammengebunden sind. Das Zusammenbinden kann dabei z.B. mittels Umreifungsband oder dergleichen erfolgen. Die Schlauchbündel können z.B. sehr einfach und praktisch auf den beim Stand der Technik bekannten Paletten gelagert und transportiert werden. Zum Abwickeln beim Einbau in das Bohrloch kann das Schlauchbündel dann z.B. auf eine Haspel oder dergleichen aufgesteckt und von dort abgewickelt werden.

Bevor auf weitere bevorzugte Ausgestaltungsformen erfindungsgemäßer Sondenkörper eingegangen wird, ist zunächst darauf hinzuweisen, dass es sich bei einer Geothermiesonde um eine Einrichtung handelt, die dazu vorgesehen ist, in ein Bohrloch eingebaut zu werden bzw. zu sein, um flüssiges aber evtl. auch gasförmiges Wärmeträgerfluid in den Wärmeträgerfluidschläuchen in das Bohrloch einzuspeisen und aus diesem wieder zu entnehmen. Hierdurch kann das Wärmeträgerfluid von dem das Bohrloch umgebenden Untergrund erwärmt werden oder vom Untergrund abgekühlt werden. Die so aus dem Untergrund entnommene Wärme kann z.B. zum Beheizen von Gebäuden oder auch Maschinen eingesetzt werden. Kühlt man das Wärmeträgerfluid mittels der Geothermiesonde im Untergrund ab, so kann dies z.B. zum Kühlen von Gebäuden oder auch Maschinen verwendet werden. Beim im Bohrloch eingebauten Sondenkörper handelt es sich also um eine Geothermiesonde. Der Sondenkörper kann also als Geothermiesonde eingesetzt bzw. ins Bohrloch eingebaut werden. Erfindungsgemäße Sondenkörper können sowohl im Festgestein als auch im lockeren Erdreich eingesetzt werden. Wie an sich bekannt, ist es dabei günstig, wenn nach dem Einbringen des Sondenkörpers in das Bohrloch die verbleibenden Zwischenräume zwischen der Bohrlochwand und dem Sondenkörper durch ein geeignetes Füllmaterial wie z.B. Beton oder dergleichen aufgefüllt werden, um so einen möglichst guten thermischen Übergang zwischen dem das Bohrloch umgebenden Untergrund und dem Sondenkörper bzw. dem darin fließenden Wärmeträgerfluid zu ermöglichen. Der Begriff des Schlauches bzw. des Wärmeträgerfluidschlauches beschreibt ein rohrartiges aber flexibles bzw. biegbares Gebilde, durch das ein Fluid, im vorliegenden Fall also das Wärmeträgerfluid, hindurchgeleitet werden kann. Die Wärmeträgerfluidschläuche sind dabei so flexibel, dass sie zu Schlauchrollen aufgewickelt werden können. Die Wärmeträgerfluidschläuche können glatte, aber auch aufgerauhte oder mit Rippen versehene oder anderweitig gestaltete Oberflächen aufweisen, um einen möglichst guten thermischen Übergang zu ermöglichen. Die Wärmeträgerfluidschläuche weisen in bevorzugten Ausgestaltungsformen Kunststoff, vorzugsweise Polyethylen, auf oder bestehen daraus. So kann z.B. sogenanntes HD (high density) Polyethylen zum Einsatz kommen, um die Wärmeträgerfluidschläuche auszubilden. Für den Einsatz als Geothermiesonde sollte das für die Wärmeträgerfluidschläuche eingesetzte Material bevorzugt jedenfalls eine Steifigkeit (E-Modul) von zumindest 1000 MPa (Megapascal) und/oder eine Zugfestigkeit von zumindest 22 MPa aufweisen. Diese Werte können z.B. gemäß ISO 527-2 bestimmt werden. Die Wärmeträgerfluidschläuche weisen günstigerweise eine Wandstärke zwischen 2mm und 6mm, besonders bevorzugt zwischen 3mm und 5,8mm auf. Der Außendurchmesser der Wärmeträgerfluidschläuche liegt bevorzugt zwischen 25mm und 65mm, besonders bevorzugt zwischen 30mm und 50mm.

Beim Sondenfuß handelt es sich um den in der Einbaustellung in das Bohrloch eingeschobenen vorderen Abschluss der Wärmeträgerfluidschläuche des Sondenkörpers. In den Sondenfußteilen sind die Wärmeträgerfluidschläuche jeweils paarweise miteinander mechanisch verbunden. Besonders bevorzugt ist dabei vorgesehen, dass die mittels des Sondenfußteils mechanisch miteinander verbundenen Wärmeträgerfluidschläuche im Sondenfußteil mittels einer, vorzugsweise U-förmigen, Verbindungsleitung fluidleitend miteinander verbunden sind. Die beiden Wärmeträgerfluidschläuche der jeweiligen Schlauchrolle können z.B. am Sondenfußteil angeschweißt sein. Hierzu ist es günstig, wenn die Wärmeträgerfluidschläuche und das Sondenfußteil entweder aus demselben oder zumindest aus miteinander verschweißbaren Materialien bestehen. Besonders einfach ist dies realisierbar, wenn die Sondenfußteile aus denselben oben genannten Materialien wie die Wärmeträgerfluidschläuche bestehen. Besonders einfache Ausgestaltungsformen sehen vor, dass jedes Sondenfußteil einstückig, vorzugsweise als Kunststoffkörper, ausgebildet ist. Das Sondenfußteil kann für sich allein gesehen frei von Schweißungen ausgebildet sein. Z.B. kann jedes Sondenfußteil als ein in sich zusammenhängendes Spritzgussteil hergestellt werden.

Wie bereits eingangs angedeutet, sehen bevorzugte Varianten des erfindungsgemäßen Sondenkörpers vor, dass die vier Wärmeträgerfluidschläuche zum Sondenkörper zusammenbaubar sind, indem man die Sondenfußteile zu einem Sondenfuß zusammensetzt. Wenn man die beiden Sondenfußteile zusammenbaut, können anschließend die Wärmeträgerfluidschläuche von den jeweiligen Schlauchrollen abgewickelt und ins Bohrloch versenkt werden. Hierfür ist es nicht zwingend notwendig, die Wärmeträgerfluidschläuche noch einmal in anderer Art und Weise miteinander zu verbinden. Natürlich ist es aber auch nicht ausgeschlossen, dass man dies trotzdem tut. Dieses zusätzliche Verbinden der Wärmeträgerfluidschläuche kann z.B. mittels Klebeband oder dergleichen an voneinander distanzierten Stellen erfolgen.

Gemäß der Erfindung ist zum Zusammenbauen der beiden Sondenfußteile zum Sondenfuß vorgesehen, dass die Sondenfußteile zum Zusammensetzen gemeinsam in einen Verbindungskörper des Sondenfußes einschiebbar und in diesem befestigbar sind. Weiters ist vorgesehen, dass die Sondenfußteile im Verbindungskörper mittels einer Rastverbindungseinrichtung fixierbar sind. Der Verbindungskörper kann eine loch- oder sacklochförmige Öffnung aufweisen, in die die Sondenfußteile einschiebbar sind. Bei der Rastverbindungseinrichtung handelt es sich um eine Einmal-Rastverbindungseinrichtung, welche nach dem Verrasten nicht mehr zerstörungsfrei gelöst werden kann. Insbesondere um als eine solche Einmal-Rastverbindungseinrichtung ausgestaltet zu sein, weisen bevorzugte Ausgestaltungsformen von Rastverbindungseinrichtungen zumindest einen Schnappkörper mit V-förmigem Querschnitt auf. Dieser Schnappkörper kann z.B. als ein in sich geschlossener Schnappring mit entsprechendem V-förmigen Querschnitt ausgebildet sein. Zusätzlich zur Rastverbindungseinrichtung können die Sondenfußteile auch mittels einer Schraubverbindung im oder am Verbindungskörper befestigt werden.

Vor allem um den Sondenkörper in vertikale oder schräg nach unten führende Bohrlöcher besonders einfach einführen zu können, können am Verbindungskörper, vorzugsweise auf dessen von den Wärmeträgerfluidschläuchen abgewandter Seite ein Zusatzgewicht oder eine Abfolge von Zusatzgewichten befestigbar sein. Erfindungsgemäß erfolgt diese Befestigung der Zusatzgewichte am Verbindungskörper mittels einer nicht mehr zerstörungsfrei lösbaren Einmal-Rastverbindungseinrichtung. Besonders bevorzugte Ausgestaltungsformen sehen hierbei vor, dass das Zusatzgewicht oder die Abfolge von Zusatzgewichten mit derselben Rastverbindungseinrichtung am Verbindungskörper befestigt wird, wie die Sondenfußteile. Bei einer Abfolge von Zusatzgewichten kann sogar vorgesehen sein, dass auch diese Zusatzgewichte mit derselben Art der Rastverbindungseinrichtung aneinander befestigbar sind. Die Zusatzgewichte weisen bevorzugt Metall auf oder bestehen daraus.

Ein bevorzugtes Verfahren zur Herstellung eines erfindungsgemäßen Sondenkörpers sieht vor, dass die zwei Wärmeträgerfluidschläuche der jeweiligen Schlauchrolle jeweils gemeinsam extrudiert und, vorzugsweise unmittelbar, anschließend gemeinsam zur Ausbildung der Schlauchrolle aufgewickelt werden. Das gemeinsame Extrudieren kann dabei z.B. über ein gemeinsames Extrusionswerkzeug erfolgen.

Weitere Merkmale und Einzelheiten bevorzugter Ausgestaltungsformen werden beispielhaft in der nachfolgenden Figurenbeschreibung erläutert. Es zeigen:
Fig. 1 eine schematisierte Darstellung des als Geothermiesonde in ein Bohrloch eingebauten Sondenkörpers in einem Ausschnitt am unteren Ende des Bohrlochs;
Fig. 2 einen erfindungsgemäßen Sondenkörper vor dem Einbau in das Bohrloch in Form von zwei Schlauchrollen;
Fig. 3 eine Detaildarstellung des Sondenfußes;
Fig. 4 eine Schnittdarstellung zum Sondenfuß;
Fig. 5 ein Zusatzgewicht in teilweise geschnittener Darstellung;
Fig. 6 eine Schnittdarstellung entlang der Schnittlinie AA aus Fig. 4;
Fig. 7 eine Draufsicht von oben auf den Sondenfuß;
Fig. 8 eine Schnittdarstellung durch ein Extrusionswerkzeug;
Fig. 9 eine schematisierte Darstellung zum Extrudieren und Aufwickeln zweier Wärmeträgerfluidschläuche auf eine Schlauchrolle;
Fig. 10 eine Seitenansicht auf eine Schlauchrolle, welche sich auf einer Schlauchtrommel befindet.

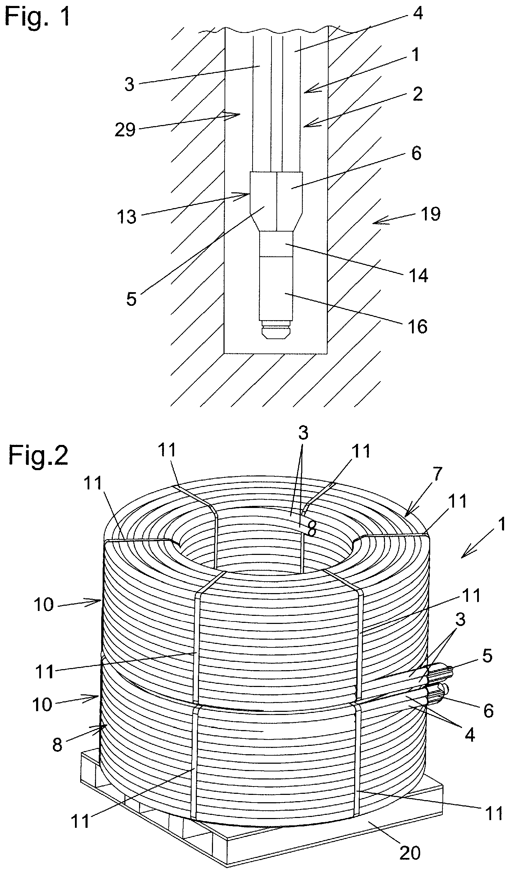

Fig. 1 zeigt schematisiert ein Bohrloch 2, in das ein erfindungsgemäßer Sondenkörper 1 als Geothermiesonde eingebaut ist. Dargestellt ist das untere Ende des Bohrlochs 2, welches in das Untergrundmaterial 19 in konventioneller Art und Weise eingebohrt werden kann. Der Zwischenraum 29 zwischen dem Sondenkörper 1 und dem das Bohrloch 2 umgebenden Untergrundmaterial 19 kann in an sich bekannter Art und Weise mit einem Füllmaterial aufgefüllt werden, um einen besseren thermischen Übergang zwischen dem Untergrundmaterial 19 und den Wärmeträgerfluidschläuchen 3 und 4 des Sondenkörpers 1 zu ermöglichen. Zum Einbringen dieses Verfüllmaterials kann ein hier nicht dargestellter Spülschlauch in an sich bekannter Art und Weise z.B. mittels Klebeband an einem oder mehreren der Wärmeträgerfluidschläuche 3 und 4 und/oder auch am Sondenfuß 13 angebracht werden. Dies ist hier nicht gezeigt, kann aber wie beim Stand der Technik ausgeführt sein. In Fig. 1 ist eine Ansicht gewählt, in der jeweils einer der Wärmeträgerfluidschläuche 3 und 4 und der jeweils zugeordnete Sondenfußteil 5 und 6 zu sehen sind. Die beiden Sondenfußteile 5 und 6 sind über den Verbindungskörper 14 miteinander verbunden. An dem den Wärmeträgerfluidschläuchen 3 und 4 entgegengesetzten Ende des Sondenfußes 13 ist am Verbindungskörper 14 ein Zusatzgewicht 16 angebracht. Dieses Zusatzgewicht 16 vereinfacht das Einbringen der Wärmeträgerfluidschläuche 3 und 4 und der zum Sondenfuß 13 miteinander verbundenen Sondenfußteile 5 und 6 vor allem bei vertikalen oder schräg nach unten verlaufenden Bohrlöchern 2. Insbesondere bei mehr oder weniger horizontal verlaufenden Bohrungen 2 kann auf die Zusatzgewichte 16 auch verzichtet werden. In dem hier gezeigten Ausführungsbeispiel sind jeweils zwei Wärmeträgerfluidschläuche 3 über den Sondenfuß 5 und zwei Wärmeträgerfluidschläuche 4 über den Sondenfußteil 6 miteinander mechanisch verbunden. Ansonsten sind die Wärmeträgerfluidschläuche 3 und 4 günstigerweise zumindest im abgewickelten Zustand nicht mehr zusätzlich mechanisch miteinander verbunden. In Fig. 1 ist jeweils nur einer der Wärmeträgerfluidschläuche 3 und 4 zu sehen. Die anderen Wärmeträgerfluidschläuche 3, 4 befinden sich jeweils dahinter und sind daher in Fig. 1 nicht zu sehen.

Fig. 2 zeigt die beiden Schlauchrollen 7 und 8 des Sondenkörpers 1 vor dem Einbau in das Bohrloch 2. Beide Schlauchrollen 7 und 8 sind jeweils mittels der Umreifungsbänder 11 zu einem Schlauchbündel 10 zusammengefasst. In dieser Art und Weise können die Schlauchrollen 7 und 8 des Sondenkörpers 1 z.B. in der in Fig. 2 dargestellten Form aufeinander gelegt auf einer Palette 20 gelagert und transportiert werden. Natürlich kann auf die Palette 20 auch verzichtet werden, genauso gut wie die beiden Schlauchbündel 10 nicht unbedingt aufeinander lagern müssen. Die Schlauchrolle 7 umfasst die beiden miteinander aufgewickelten und mittels des Sondenfußteils 5 mechanisch miteinander verbundenen Wärmeträgerfluidschläuche 3. Die Schlauchrolle 8 umfasst die beiden miteinander aufgewickelten und mechanisch mittels des Sondenfußteils 6 miteinander verbundenen Wärmeträgerfluidschläuche 4. Bei sehr tiefen Bohrlöchern und damit sehr langen Sondenkörpern 1 kann auch vorgesehen sein, dass die Wärmeträgerfluidschläuche 3 und 4jeweils aus mehr als einer Schlauchrolle 7 bzw. 8 bestehen. Die zwei Wärmeträgerfluidschläuche 3 bzw. 4 einer Schlauchrolle 7 bzw. 8 können dann durch jeweils zusätzliche Wärmeträgerfluidschläuche 3 und 4, welche in entsprechenden Schlauchrollen 7 und 8 aber ohne Sondenfußteile 5 und 6 jeweils paarweise gemeinsam aufgewickelt sind, verlängert werden. Das Zusammenschweißen der Fluidschläuche an den stirnseitigen Stoßstellen kann, wie beim Stand der Technik bekannt, erfolgen.

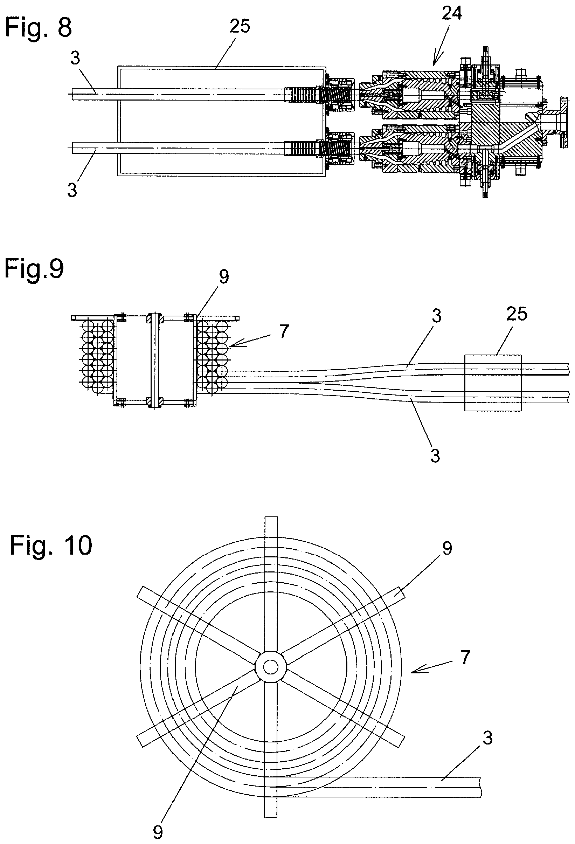

Alternativ zu den in Fig. 2 gezeigten Schlauchbündeln 10 können die beiden Schlauchrollen 7 und 8 natürlich auch jeweils auf eine Schlauchtrommel 9 aufgewickelt sein, wie dies beispielhaft in den Fig. 9 und 10 gezeigt ist. Natürlich können auch zusammengebundene Schlauchbündel 10 auf Schlauchtrommeln 9 gelagert werden.

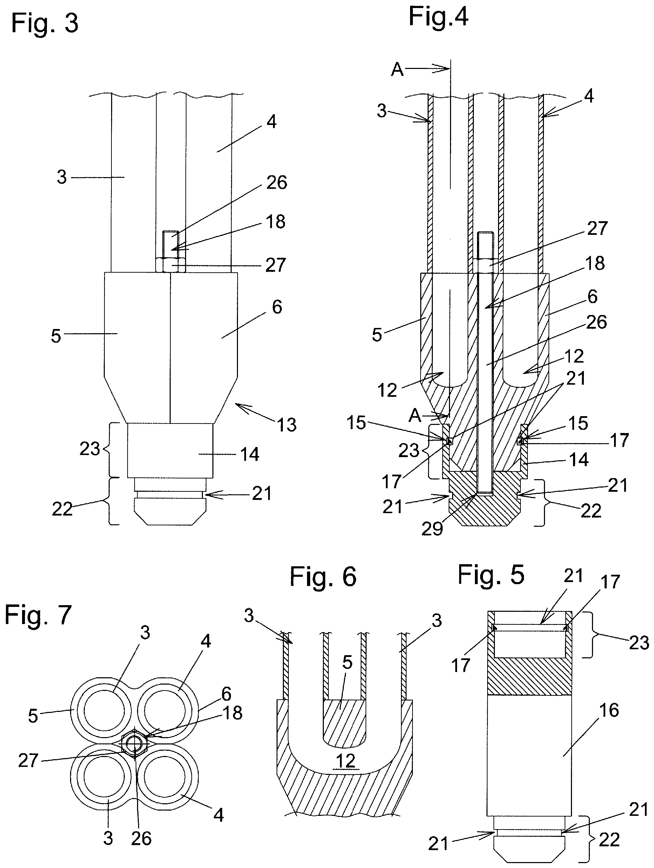

Fig. 3 zeigt nun eine Seitenansicht auf den Sondenfuß 13 mit den daran befestigten Wärmeträgerfluidschläuchen 3 und 4. Fig. 4 zeigt denselben Sondenfuß 13 in einem Längsschnitt. Die beiden Wärmeträgerfluidschläuche 3 sind an das Sondenfußteil 5 angeschweißt, die Wärmeträgerfluidschläuche 4 an das Sondenfußteil 6. Zusätzlich zu der mechanischen Befestigung der jeweiligen Wärmeträgerfluidschläuche 3 und 4 weisen beide Sondenfußteile 5 und 6 jeweils in ihrem Inneren eine Verbindungsleitung 12 auf, welche die an ihnen jeweils befestigten Wärmeträgerfluidschläuche 3 bzw. 4 fluidleitend miteinander verbinden. Anhand des Schnittes entlang der Schnittlinie AA aus Fig. 4 ist in Fig. 6 der Verlauf der Verbindungsleitung 12 beispielhaft innerhalb des Sondenfußteils 5 mit den beiden daran befestigten Wärmeträgerfluidschläuchen 3 gezeigt. Die Verbindungsleitungen 12 verlaufen jeweils innen in den Sondenfußteilen 5 und 6.

In den Fig. 3 und 4 ist gut zu sehen, wie die beiden Sondenfußteile 5 und 6 gemeinsam in den Verbindungskörper 14 des Sondenfußes 13 eingeschoben sind.

Der hier dargestellte Verbindungskörper 14 weist einen in diesem Fall sacklochförmigen Aufnahmebereich 23 sowie einen daran anschließenden verjüngten Bereich 22 auf. Der Aufnahmebereich 23 dient der Befestigung der beiden Sondenfußteile 5 und 6 im Verbindungskörper 14 und damit auch aneinander. Der verjüngte Bereich 22 dient der Befestigung eines Zusatzgewichts 16 am Verbindungskörper, soweit dies notwendig ist.

Die Befestigung der beiden Sondenfußteile 5 und 6 im Verbindungskörper 14 erfolgt gemäß der Erfindung über eine Rastverbindungseinrichtung 15, welche als eine Einmal-Rastverbindungseinrichtung ausgeführt ist. Bei einer Einmal-Rastverbindungseinrichtung ist vorgesehen, dass diese Verbindung einmal einrastet und dann nicht mehr zerstörungsfrei gelöst werden kann. Im vorliegenden Fall der Verwendung zum Zusammenbau eines Sondenkörpers 1 für eine Geothermiesonde reicht dies natürlich aus, da nach dem Einbau des Sondenkörpers 1 in das Bohrloch 2 keine Trennung der Sondenfußteile 5 und 6 voneinander mehr vorgesehen ist.

Bei dem hier gezeigten Ausführungsbeispiel eines Sondenkörpers 1 werden dieselben Rastverbindungseinrichtungen 15 zum Verbinden der beiden Sondenfußteile 5 und 6 mit dem Verbindungskörper 14 wie für das Verbinden des Verbindungskörpers 14 mit dem Zusatzgewicht 16 verwendet. Dieselbe Art der Rastverbindungseinrichtung 15 kommt in diesem Ausführungsbeispiel auch zum Einsatz, wenn durch das Miteinanderverbinden von mehreren Zusatzgewichten 16 eine Abfolge von Zusatzgewichten 16 geschaffen werden soll.

Die hier eingesetzte Rastverbindungseinrichtung 15 weist einen Schnappkörper 17 auf. Dieser ist im hier gezeigten Ausführungsbeispiel jeweils in Form eines Schnappringes mit V-förmigem Querschnitt ausgebildet, wie dies in den Fig. 4 und 5 gut zu sehen ist. Dieser Schnappkörper 17 liegt in einer ringförmigen Nut 21 in der den Aufnahmebereich 23 umgebenden Wandung des Verbindungskörpers 14. Werden die Sondenfußteile 5 und 6 gemeinsam entsprechend weit in diesen Aufnahmebereich 23 eingeschoben, so rasten die nach innen weisenden Schenkel des V-förmigen Querschnitts des Schnappkörpers 17 in die entsprechenden Nuten 21 in den Sondenfußteilen 5 und 6 ein, womit eine nicht mehr zerstörungsfrei lösbare Einmal-Rastverbindung erreicht wird.

Im gezeigten Ausführungsbeispiel ist zusätzlich noch eine Schraubverbindung 18 vorgesehen, um die Sondenfußteile 5 und 6 zusätzlich am Verbindungskörper 14 zu befestigen. Bei der dargestellten Variante handelt es sich bei der Schraubverbindung 18 um einen Gewindestift 26, welcher in ein entsprechendes sacklochförmiges Gewinde 28 im Verbindungskörper 14 eingeschraubt ist. Der Gewindestift 26 verläuft hier in diesem Beispiel in entsprechenden Ausnehmungen zwischen dem Sondenfußteilen 5 und 6 parallel zur Längserstreckungsrichtung der Wärmeträgerfluidschläuche 3 und 4. Zwischen den Wärmeträgerfluidschläuchen 3 und 4 ist eine Mutter 27 auf den Gewindestift 26 aufgeschraubt, welche sich derart an den beiden Sondenfußteilen 5 und 6 abstützt, dass diese zusätzlich am Verbindungskörper 14 befestigt sind.

Fig. 5 zeigt nun ein Zusatzgewicht 16 in einer teilweise geschnittenen Darstellung. Es ist gut zu erkennen, dass dieses Zusatzgewicht 16 in diesem Ausführungsbeispiel sowohl einen Aufnahmebereich 23 als auch einen verjüngten Bereich 22 aufweist, welche jeweils genauso ausgebildet sind wie beim Verbindungskörper 14. Der Aufnahmebereich 23 mit der darin ausgebildeten Nut 21 und dem darin angeordneten Schnappkörper 17 dient der Befestigung des Zusatzgewichtes 16 am Verbindungskörper 14 bzw. an dessen verjüngtem Bereich 22. An den verjüngten Bereich 22 des Zusatzgewichts 16 können in analoger Art und Weise mittels entsprechender Schnappkörper 17 zusätzliche Zusatzgewichte 16 eingerastet werden. Der Vollständigkeit halber wird darauf hingewiesen, dass Zusatzgewichte 16 untereinander auch auf andere Art und Weise befestigt werden können, z.B. durch Schraubverbindungen, andere Schnappverbindungen, Vernieten, Verkleben, Verschweißen und dergleichen.

Fig. 7 zeigt eine Draufsicht auf die beiden miteinander verbundenen Sondenfußteile 5 und 6 und die daran befestigten Wärmeträgerfluidschläuche 3 und 4. Gut zu sehen ist hier auch die Mutter 27 und der Gewindestift 26 der Verschraubung 18.

In Fig. 8 ist in einem Schnitt eine an sich bekannte und daher hier nicht noch einmal im Detail beschriebene Doppelextrusionsdüse 24 gezeigt, mit der gleichzeitig und parallel zwei Wärmeträgerfluidschläuche 3 oder auch zwei Wärmeträgerfluidschläuche 4 extrudiert werden können. Am vorderen Ende der Doppelextrusionsdüse 24 befindet sich ein an sich bekannter Vakuumtank 25, welcher dem Aushärten des frisch extrudierten Materials dient. Auch dies ist an sich bekannt und muss nicht weiter beschrieben werden.

Fig. 9 zeigt schematisiert, wie zwei Wärmeträgerfluidschläuche 3 gemäß des oben geschilderten erfindungsgemäßen Verfahrens zur Herstellung des Sondenkörpers 1 gemeinsam extrudiert und anschließend gemeinsam zur Ausbildung einer Schlauchrolle 7 oder 8 aufgewickelt werden. Das Aufwickeln der Wärmeträgerfluidschläuche 3 zur Schlauchrolle 7 erfolgt auf einer Schlauchtrommel 9. Die fertiggestellte Schlauchrolle 7 kann dann entweder von der Schlauchtrommel 9 abgenommen und als Schlauchbündel 10 mittel Umreifungsbändern 11 zusammengebunden werden oder auf der Schlauchtrommel 9 verbleiben und so zum Bohrloch transportiert werden. Auch Kombinationen dieser Varianten sind möglich. Die Wärmeträgerfluidschläuche 4 werden in gleicher Art und Weise extrudiert und zur Schlauchrolle 8 aufgewickelt.

Fig. 10 zeigt noch eine schematisierte Seitenansicht auf die Schlauchtrommel 9 mit der darauf angeordneten Schlauchrolle 7 der beiden Wärmeträgerfluidschläuche 3.

### Legende zu den Hinweisziffern:

| | | | |
|---|---|---|---|
| 1 | Sondenkörper | 16 | Zusatzgewicht |
| 2 | Bohrloch | 17 | Schnappkörper |
| 3 | Wärmeträgerfluidschlauch | 18 | Schraubverbindung |
| 4 | Wärmeträgerfluidschlauch | 19 | Untergrundmaterial |
| 5 | Sondenfußteil | 20 | Palette |
| 6 | Sondenfußteil | 21 | Nut |
| 7 | Schlauchrolle | 22 | verjüngter Bereich |
| 8 | Schlauchrolle | 23 | Aufnahmebereich |
| 9 | Schlauchtrommel | 24 | Doppelextrusionsdüse |
| 10 | Schlauchbündel | 25 | Vakuumtank |
| 11 | Umreifungsband | 26 | Gewindestift |
| 12 | Verbindungsleitung | 27 | Mutter |
| 13 | Sondenfuß | 28 | Gewinde |
| 14 | Verbindungskörper | 29 | Zwischenraum |
| 15 | Rastverbindungseinrichtung | | |

## Patentansprüche

1. Sondenkörper (1) vorgesehen zum Einbau in ein Bohrloch (2) als Geothermiesonde, wobei der Sondenkörper (1) vier von Wärmeträgerfluid durchströmbare Wärmeträgerfluidschläuche (3, 4) aufweist und jeweils zwei der Wärmeträgerfluidschläuche (3, 4) über jeweils ein Sondenfußteil (5, 6) mechanisch miteinander verbunden sind, und die mittels des Sondenfußteils (5, 6) mechanisch miteinander verbundenen Wärmeträgerfluidschläuche (3, 4) im Sondenfußteil (5, 6) mittels einer Verbindungsleitung (12) fluidleitend miteinander verbunden sind, wobei die Wärmeträgerfluidschläuche (3, 4) des Sondenkörpers (1) auf zwei separate Schlauchrollen (7, 8) aufgeteilt sind, und jede der Schlauchrollen (7, 8) durch zwei gemeinsam aufgewickelte Wärmeträgerfluidschläuche (3, 4) gebildet ist und die beiden Wärmeträgerfluidschläuche (3, 4) der jeweiligen Schlauchrolle (7, 8) über jeweils eines der Sondenfußteile (5, 6) mechanisch miteinander verbunden sind, wobei die vier Wärmeträgerfluidschläuche (3, 4) zum Sondenkörper (1) mittels Zusammensetzen der Sondenfußteile (5, 6) zu einem Sondenfuß (13) zusammenbaubar sind, **dadurch gekennzeichnet, dass** die Sondenfußteile (5, 6) zum Zusammensetzen gemeinsam in einen Verbindungskörper (14) des Sondenfußes (13) einschiebbar und in diesem mittels einer nicht mehr zerstörungsfrei lösbaren Einmal-Rastverbindungseinrichtung (15) fixierbar sind, und am Verbindungskörper (14) auf dessen von den Wärmeträgerfluidschläuchen (3, 4) abgewandten Seite ein Zusatzgewicht (16) oder eine Abfolge von Zusatzgewichten (16) mittels einer nicht mehr zerstörungsfrei lösbaren Einmal-Rastverbindungseinrichtung (15) befestigbar ist.

2. Sondenkörper (1) nach Anspruch 1, **dadurch gekennzeichnet, dass** die gemeinsam zu einer der Schlauchrollen (7, 8) aufgewickelten Wärmeträgerfluidschläuche (3, 4) zumindest im abgewickelten Zustand jeweils nur über das Sondenfußteil (5, 6) mechanisch miteinander verbunden sind.

3. Sondenkörper (1) nach Anspruch 1 oder 2, **dadurch gekennzeichnet, dass** die beiden Wärmeträgerfluidschläuche (3, 4) der jeweiligen Schlauchrollen (7, 8) gemeinsam auf eine Schlauchtrommel (9) aufgewickelt oder zu einem Schlauchbündel (10), vorzugsweise mittels Umreifungsband (11), zusammengebunden sind.

4. Sondenkörper (1) nach einem der Ansprüche 1 bis 3, **dadurch gekennzeichnet, dass** die mittels des Sondenfußteils (5, 6) mechanisch miteinander verbundenen Wärmeträgerfluidschläuche (3, 4) im Sondenfußteil (5, 6) mittels einer U-förmigen Verbindungsleitung (12) fluidleitend miteinander verbunden sind.

5. Sondenkörper (1) nach einem der Ansprüche 1 bis 4, **dadurch gekennzeichnet, dass** die Wärmeträgerfluidschläuche (3, 4) Kunststoff, vorzugsweise Polyethylen, aufweisen oder daraus bestehen und/oder dass jedes Sondenfußteil (5, 6) einstückig, vorzugsweise als Kunststoffkörper, und/oder frei von Schweißungen ausgebildet ist.

6. Sondenkörper (1) nach einem der Ansprüche 1 bis 5, **dadurch gekennzeichnet, dass** die beiden Wärmeträgerfluidschläuche (3, 4) der Schlauchrolle (7, 8) am Sondenfußteil (5, 6) angeschweißt sind.

7. Sondenkörper (1) nach einem der Ansprüche 1 bis 6, **dadurch gekennzeichnet, dass** die Rastverbindungseinrichtungen (15) zumindest einen Schnappkörper (17), vorzugsweise Schnappring, mit V-förmigem Querschnitt aufweisen.

8. Sondenkörper (1) nach einem der Ansprüche 1 bis 7, **dadurch gekennzeichnet, dass** die Sondenfußteile (5, 6) zusätzlich zur Rastverbindungseinrichtung (15) mittels einer Schraubverbindung (18) im oder am Verbindungskörper (14) befestigbar sind.

9. Verfahren zur Herstellung eines Sondenkörpers (1) nach einem der Ansprüche 1 bis 8, **dadurch gekennzeichnet, dass** die zwei Wärmeträgerfluidschläuche (3, 4) der jeweiligen Schlauchrolle (7, 8) jeweils gemeinsam extrudiert und, vorzugsweise unmittelbar, anschließend gemeinsam zur Ausbildung der Schlauchrolle (7, 8) aufgewickelt werden.

## Claims

1. Probe body (1) intended for installation in a borehole (2) as a geothermal probe, the probe body (1) comprising four heat transfer fluid tubes (3, 4), through which heat transfer fluid can flow, and in each case two of the heat transfer fluid tubes (3, 4) being mechanically interconnected via one probe base part (5, 6) in each case, and the heat transfer fluid tubes (3, 4) mechanically interconnected by means of the probe base part (5, 6) being fluidically interconnected in the probe base part (5, 6) by means of a connection line (12), the heat transfer fluid tubes (3, 4) of the probe body (1) being split into two separate tube coils (7, 8), and each of the tube coils (7,8) being formed by two heat transfer fluid tubes (3, 4) wound in unison and the two heat transfer fluid tubes (3, 4) of the relevant tube coil (7, 8) being mechanically interconnected via one of the probe base parts (5, 6) in each case, it being possible to assemble the four heat transfer fluid tubes (3, 4) into a probe body (1) by bringing together the probe base parts (5, 6) to form a probe base (13), **characterised in that** the probe base parts (5, 6) can be pushed into a connecting body (14) of the probe base (13) in order to bring them together and can be secured in said connecting body by means of a single-use latching connection device (15) that can no longer be removed without being destroyed, and an additional weight (16) or a series of additional weights (16) can be fastened onto the side of the connection body (14) that is remote from the heat transfer fluid tubes (3, 4) by means of a single-use latching connection device (15) that can no longer be removed without being destroyed.

2. Probe body (1) according to claim 1, **characterised in that** the heat transfer fluid tubes (3, 4) wound in unison into one of the tube coils (7, 8) are mechanically interconnected in each case only via the probe base part (5, 6) at least in the unwound state.

3. Probe body (1) according to claim 1 or 2, **characterised in that** the two heat transfer fluid tubes (3, 4) of the respective tube coils (7, 8) are wound in unison onto a tube reel (9) or bound together in a tube bundle (10), preferably by means of strapping (11).

4. Probe body (1) according to any of claims 1 to 3, **characterised in that** the heat transfer fluid tubes (3, 4) mechanically interconnected by means of the probe base part (5, 6) are fluidically interconnected in the probe base part (5, 6) by means of a U-shaped connection line (12).

5. Probe body (1) according to any of claims 1 to 4, **characterised in that** the heat transfer fluid tubes (3, 4) comprise or consist of a plastics material, preferably polyethylene, and/or **in that** each probe base part (5, 6) is integrally formed, preferably as a plastics body, and/or is formed so as to be free of welds.

6. Probe body (1) according to any of claims 1 to 5, **characterised in that** the two heat transfer fluid tubes (3, 4) of the tube coil (7, 8) are welded on the probe base part (5, 6).

7. Probe body (1) according to any of claims 1 to 6, **characterised in that** the latching connection devices (15) comprise at least one snap-on body (17), preferably a snap-on ring, having a V-shaped cross-section.

8. Probe body (1) according to any of claims 1 to 7, **characterised in that** the probe base parts (5, 6) can be fastened in or on the connection body (14) by means of a screw connection (18), in addition to the latching connection device (15).

9. Method for producing a probe body (1) according to any of claims 1 to 8, **characterised in that** the two heat transfer fluid tubes (3, 4) of the relevant tube coil (7, 8) are coextruded and, preferably immediately, then wound in unison to form the tube coil (7, 8).

## Revendications

1. Corps de sonde (1) conçu pour être monté dans un trou de forage (2) en tant que sonde géothermique, le corps de sonde (1) présentant quatre tubes de fluide caloporteur (3, 4) pouvant être parcourus par un fluide caloporteur, et les tubes de fluide caloporteur (3, 4) étant reliés deux à deux mécaniquement par l'intermédiaire d'une partie de pied de sonde (5, 6) respective, et les tubes de fluide caloporteur (3, 4) reliés mécaniquement entre eux au moyen de la partie de pied de sonde (5, 6) sont en contact fluidique entre eux dans la partie de pied de sonde (5, 6) au moyen d'une conduite de raccordement (12), les tubes de fluide caloporteur (3, 4) du corps de la sonde (1) étant répartis sur deux bobines de tube séparées (7, 8) et chaque bobine de tube (7, 8) étant formée par deux tubes de fluide caloporteur (3, 4) enroulés ensemble, et les deux tubes de fluide caloporteur (3, 4) de chaque bobine de tube (7, 8) étant reliés mécaniquement entre eux par l'intermédiaire d'une des parties de pied de sonde (5, 6) respective, les quatre tubes de fluide caloporteur (3, 4) pouvant être assemblés pour former un pied de sonde (13) du corps de la sonde (1) au moyen de l'assemblage des parties de pied de sonde (5, 6), **caractérisé en ce que** pour être assemblés, les parties de pied de sonde (5 6) peuvent être insérées ensemble dans un corps de raccordement (14) du pied de sonde (13) et peuvent être fixés dedans au moyen d'un dispositif de raccordement par encliquetage à usage unique (15) qui ne peut plus être détaché sans être détruit, et un poids supplémentaire (16) ou une suite de poids supplémentaires (16) peuvent être fixés sur le corps de raccordement (14) sur son côté opposé aux tubes de fluide caloporteur (3, 4) au moyen d'un dispositif de raccordement par encliquetage à usage unique (15) qui ne peut plus être détaché sans être détruit.

2. Corps de sonde (1) selon la revendication 1, **caractérisé en ce que** les tubes de fluide caloporteur (3, 4) enroulés ensemble en formant l'une des bobines de tubes (7, 8) sont reliés mécaniquement ensemble uniquement par l'intermédiaire de la partie de pied de sonde (5, 6), au moins à l'état déroulé.

3. Corps de sonde (1) selon la revendication 1 ou 2, **caractérisé en ce que** les deux tubes de fluide caloporteur (3, 4) de chaque bobine de tube (7, 8) sont enroulés ensemble sur un mandrin de tube (9) ou sont liés ensemble pour former un faisceau de tubes (10), de préférence au moyen d'une bande de cerclage (11).

4. Corps de sonde (1) selon l'une des revendications 1 à 3, **caractérisé en ce que** les tubes de fluide caloporteur (3, 4) reliés ensemble mécaniquement par la partie de pied de sonde (5, 6) sont en contact fluidique dans la partie de pied de sonde (5, 6) au moyen d'une conduite de raccordement (12) en forme de U.

5. Corps de sonde (1) selon l'une des revendications 1 à 4, **caractérisé en ce que** les tubes de fluide caloporteur (3, 4) contiennent ou sont composés de matière plastique, de préférence de polyéthylène, et/ou **en ce que** chaque partie de pied de sonde (5, 6) est conçue d'une seule pièce, de préférence sous forme d'un corps en matière plastique, et/ou exempte de soudures.

6. Corps de sonde (1) selon l'une des revendications 1 à 5, **caractérisé en ce que** les deux tubes de fluide caloporteur (3, 4) de la bobine de tube (7, 8) sont soudés à la partie de pied de sonde (5, 6).

7. Corps de sonde (1) selon l'une des revendications 1 à 6, **caractérisé en ce que** les dispositifs de raccordement par encliquetage (15) présentent au moins un corps d'encliquetage (17), de préférence une bague d'encliquetage, ayant une section transversale en forme de V.

8. Corps de sonde (1) selon l'une des revendications 1 à 7, **caractérisé en ce que** les parties de pied de sonde (5, 6) peuvent être fixées dans ou sur le corps de raccordement (14) au moyen d'un raccord à vis (18) en plus du dispositif de raccordement par encliquetage (15).

9. Procédé de fabrication d'un corps de sonde (1) selon l'une des revendications 1 à 8, **caractérisé en ce que** les deux tubes de fluide caloporteur (3, 4) de chaque bobine de tube (7, 8) sont extrudés ensemble et sont ensuite, de préférence directement après l'extrusion, enroulés ensemble pour former la bobine de tube (7, 8).
